(19) **Europäisches Patentamt / European Patent Office / Office européen des brevets**

(11) **EP 2 605 440 B1**

(12) **EUROPEAN PATENT SPECIFICATION**

(45) Date of publication and mention of the grant of the patent:
**14.12.2022 Bulletin 2022/50**

(21) Application number: **11816045.6**

(22) Date of filing: **20.06.2011**

(51) International Patent Classification (IPC):
**H04L 1/18** $^{(2006.01)}$

(52) Cooperative Patent Classification (CPC):
**H04L 1/1822; H04L 1/1812; H04L 2001/0097**

(86) International application number:
**PCT/CN2011/075980**

(87) International publication number:
**WO 2012/019486 (16.02.2012 Gazette 2012/07)**

(54) **METHOD AND DEVICE FOR IDENTIFYING UPLINK HYBRID AUTOMATIC REPEAT REQUEST PROCESS OF BACKHAUL LINK**

VERFAHREN UND VORRICHTUNG ZUM ERKENNEN EINES AUTOMATISCHEN UPLINK-HYBRID-WIEDERHOLUNGSANFRAGEPROZESSES EINES BACKHAUL-LINKS

PROCÉDÉ ET DISPOSITIF POUR IDENTIFIER UN PROCESSUS DE DEMANDE DE RÉPÉTITION AUTOMATIQUE HYBRIDE DE LIAISON MONTANTE DANS UNE LIAISON EN RETOUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2010 CN 201010252870**

(43) Date of publication of application:
**19.06.2013 Bulletin 2013/25**

(73) Proprietor: **ZTE Corporation**
**Shenzhen, Guangdong 518057 (CN)**

(72) Inventors:
• **BI, Feng**
**Shenzhen**
**Guangdong 518057 (CN)**
• **YANG, Jin**
**Shenzhen**
**Guangdong 518057 (CN)**
• **WU, Shuanshuan**
**Shenzhen**
**Guangdong 518057 (CN)**
• **YUAN, Ming**
**Shenzhen**
**Guangdong 518057 (CN)**
• **LIANG, Feng**
**Shenzhen**
**Guangdong 518057 (CN)**

• **DAI, Bo**
**Shenzhen**
**Guangdong 518057 (CN)**

(74) Representative: **Deambrogi, Edgardo et al**
**Jacobacci & Partners S.p.A.**
**Corso Emilia 8**
**10152 Torino (IT)**

(56) References cited:
**WO-A2-2009/053930    WO-A2-2010/009425**
**CN-A- 101 572 593      CN-A- 101 610 138**
**CN-A- 101 686 115      US-A1- 2010 017 671**

• **PANASONIC: "UL/DL HARQ timing for backhaul", 3GPP DRAFT; R1-103774, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20100628, 22 June 2010 (2010-06-22), XP050449203, [retrieved on 2010-06-22]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

• 3rd Generation Partnership Project; Technical Specification Group Radio Access Network: "Medium Access Control (MAC) protocol specification (Release 8)", , 1 June 2010 (2010-06-01), XP002776027, Retrieved from the Internet: URL:http://www.3gpp.org/ftp/Specs/archive/36_series/36.321/36321-890.zip [retrieved on 2017-11-27]

**Description**

**Field of the invention**

The disclosure relates to the field of mobile communication technologies, and in particular to a method and a device for identifying the uplink Hybrid Automatic Repeat Request (HARQ) process of the backhaul link in the Long Term Evolution (LTE) system and the Long Term Evolution Advanced (LTE-A) system of the 3rd Generation Partnership Project (3GPP).

**Background of the Invention**

The LTE system, the LTE-A system and the International Mobile Telecommunication Advanced (IMT-Advanced) system are all based on the Orthogonal Frequency Division Multiplexing (OFDM) technique. In the OFDM system, data is mainly in the form of two-dimensions of time domain and frequency domain. In the LTE and the LTE-A, a Resource Block (RB, or called a Physical RB when mapped to a physical resource) is defined as OFDM symbols in 1 continuous slot in the time domain, and 12 or 24 continuous subcarriers in the frequency domain. Thus, 1 RB consists of $N_{symb} \times N_{sc}^{RB}$ Resource Elements (RE), wherein $N_{symb}$ represents the number of OFDM symbols in a slot, and $N_{sc}^{RB}$ represents the number of continuous subcarriers of the RB in the frequency domain.

In the LTE-A system, there are mainly 2 types of subframe: the unicast subframe used for a point-to-point transmission and the multicast subframe used for a point-to-multipoint transmission (each subframe has 2 slots). And, there are mainly 2 types of Cyclic Prefix (CP): the normal CP and an extended CP, wherein for the normal CP, each subframe totally has 14 OFDM symbols; for the extended CP, each subframe totally has 12 OFDM symbols. The OFDM symbols are numbered starting from 0. For example, "#0" represents the first OFDM symbol.

After the Relay Node (RN) is introduced into the LTE-A system, new links are added. The corresponding technical terms include: backhaul link, which refers to the link between an eNode-B (also called base station or eNB) and the RN; access link, which refers to the link between the RN and User Equipment (UE); and direct link, which refers to the link between the eNode-B and the UE. When inband-relay is adopted, the link between the eNode-B and the relay, and the link between the relay and the UE operate on the same frequency resource. Since an inband-relay transmitter would generate interference (self-interference) on its own receiver, it is impossible for the link between the eNode-B and the relay, and the link between the relay and the UE to operate on the same frequency resource, except that there is enough signal separation and antenna isolation. Similarly, the relay cannot transmit data to the eNode-B while receiving data from the UE. One possible solution for the problem of receiving-transmitting interference is to render the relay not to transmit data to the UE while receiving data from the eNode-B. That is to say, a gap needs to be added to the link between the relay and the UE. A Multicast Broadcast Single Frequency Network (MBSFN) subframe for a backhaul subframe is configured, such that the UE does not perform any receiving/transmitting operation within the time period of "gap". The relay finishes the handover from the transmitting to the receiving within the time period of "gap", and receives the data from the eNB in the latter OFDM symbols after finishing the handover. At present, the specific method of adopting an MBSFN subframe for a backhaul subframe in the LTE is that: a Multimedia Broadcast Multicast Service (MBMS) Control Entity (MCE) first configures available MBSFN subframes for the eNode-B, and the eNode-B configures available backhaul subframes in these available MBSFN subframes.

Based on the regulation in the present LTE system, one 10ms radio frame consists of ten 1ms-subframes, which can include unicast and multicast broadcast. In the mode of Frequency Division Duplex (FDD), subframes #0 and #5 are used for transmitting a synchronization signal; and subframes #4 and #9 are used for paging. In the mode of Time Division Duplex (TDD), subframes #0 and #5 are used for transmitting a synchronization signal; and subframes #1 and #6 are used for paging.

That is to say, the FDD subframes {#0, #4, #5, #9} and the TDD subframes {#0, #1, #5, #6} are used for the above special purposes respectively. Thus, these subframes cannot be allocated as MBSFN subframes. That is, in one radio frame, there are at most 6 subframes that can be allocated as the MBSFN subframes.

In the LTE system, the data transmission between the UE and the eNode-B requires to establish a HARQ process and perform corresponding feedback. When the eNode-B receives the data from the UE, the eNode-B generates downlink feedback information (Acknowledgement/Negative Acknowledgement (ACK/NACK)) or Uplink (UL) grant information (mainly including New Data Indicator (NDI), Modulation and Coding Scheme (MCS), Resource Allocation (RA) etc.) according to the decoding condition. And, the eNode-B transmits the information to the UE through downlink. The UE performs subsequent processing according to the received information. If receiving ACK or NDI=1 or 0, the UE continues to transmit new data. If receiving NACK or NDI=0 or 1, the UE retransmits the data to the eNode-B on the same HARQ process.

In the above content, since the backhaul link cannot use FDD subframes {#0, #4, #5, #9} and TDD subframes {#0, #1, #5, #6} to transmit the data of the backhaul link, the HARQ process is limited to a certain extent. Thus, it is needed to identify the HARQ process or calculate the ID of the HARQ process. This is the problem that the disclosure aims to solve.

The 3GPP Draft R1-103774 "UL/DL HARQ timing for backhaul" describes the problems of HARQ timing over backhaul interface and present proposals on the UL backhaul subframe configuration and UL/DL HARQ timing for backhaul interface.

The 3GPP TS 36.321 "Medium Access Control (MAC) protocol specification" describes the different services provided by MAC sub layer to upper layers and, among other aspects of the MAC protocol, discloses how the HARQ process ID associated with the Transmission Time Interval (TTI).

## Summary of the Invention

In view of the problems above, the main purpose of the disclosure is to provide a method and a device for identifying a UL HARQ process in a backhaul link, so as to solve the problem of identification of the UL HARQ process of the backhaul link.

In order to achieve the purpose above, the technical solution of the disclosure is realized as follows.

The disclosure provides a method for identifying a UL HARQ process in a backhaul link, according to appended independent claim 1.

Based on the method above, the disclosure also provides a device for identifying a UL HARQ process of a backhaul link, according to appended independent claim 7.

Preferred embodiments are set out in appended dependent claims.

## Brief Description of the Drawings

Fig. 1 shows a flowchart of a method for identifying a HARQ process of a backhaul link according to Embodiment 1 of the disclosure;

Fig. 2 shows a flowchart of a method for identifying a HARQ process of a backhaul link according to Embodiment 3 of the disclosure;

Fig. 3 shows a flowchart of a method for identifying a HARQ process of a backhaul link according to Embodiment 5 of the disclosure; and

Fig. 4 shows a flowchart of a method for identifying a HARQ process of a backhaul link according to Embodiment 7 of the disclosure.

## Detailed Description of the Embodiments

The basic idea of the disclosure is that: the base station and the relay node identify the UL HARQ process of the backhaul link according to the UL subframe number of the backhaul link, or the DL subframe number of the backhaul link, or the index of the set composed by the UL subframes of the backhaul link, or the index of the set composed by the DL subframes of the backhaul link.

In the disclosure, the calculation method for the DL subframe number and the UL subframe number is as follows:

DL subframe number=10*SFN+DL subframe index
UL subframe number=10*SFN+UL subframe index
wherein SFN represents the system frame number; UL subframe number represents the uplink subframe number; DL subframe number represents the downlink subframe number; DL subframe index represents the downlink subframe index; and UL subframe index represents the uplink subframe index.

One frame (also called a radio frame) comprises 10 subframes, and one subframe comprises 2 slots. Thus, one frame comprises 20 slots. The DL subframe index and the UL subframe index take a value from (#0, #1, #2, #3, #4, #5, #6, #7, #8, #9). The DL slot index and the UL slot index take a value from (#0, #1, #2, #3, #4, #5, #6, #7, #8, #9, #10, #11, #12, #13, #14, #15, #16, #17, #18, #19). Both the DL slot index and UL slot index are marked as $n_s$ for short. Specifically, DL subframe index $= \lfloor n_s / 2 \rfloor$ means that the DL subframe index is obtained by rounding down a value which is obtained by dividing $n_s$ corresponding to downlink by 2; and UL subframe index $= \lfloor n_s / 2 \rfloor$ means that the UL subframe index is obtained by rounding down a value which is obtained by dividing $n_s$ corresponding to uplink by 2; wherein $\lfloor \rfloor$ means rounding down.

For a better understanding of the purpose, technical scheme and advantages of the disclosure, embodiments are provided hereinafter to illustrate the disclosure in detail with reference to the drawings.

Embodiment 1

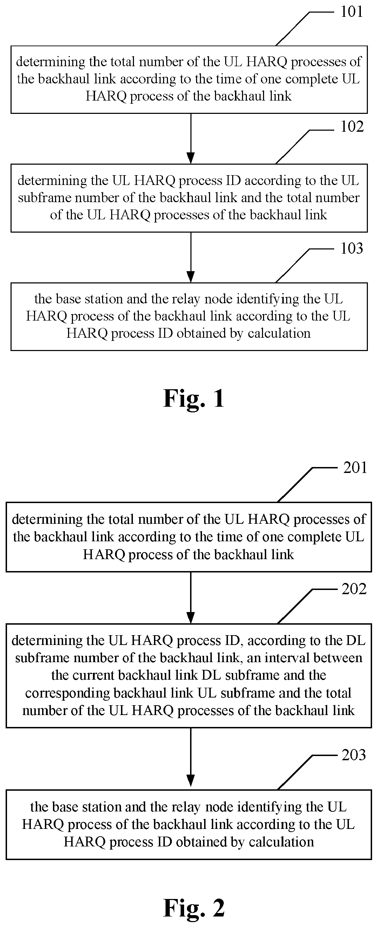

Fig. 1 shows a flowchart of a method of a base station and a relay node identifying a HARQ process of a backhaul link in an FDD system according to Embodiment 1. This embodiment identifies the UL HARQ process of the backhaul link according to a UL subframe number of the backhaul link. The detailed steps are as follows.

Step 101: determining the total number of the UL HARQ processes of the backhaul link according to the time of one complete UL HARQ process of the backhaul link.

Provided, in the FDD system, the time of one complete UL HARQ process of the backhaul link is 8ms and/or 16ms (Round Trip Time (RTT), which represents the time interval between the first transmission and the second retransmission, or between the second retransmission and the third retransmission, and so on). In the FDD system, since the backhaul link cannot use subframes {#0, #4, #5, #9}, the backhaul link cannot use the corresponding UL subframes {#4, #8, #9, #3} either. That is, from 0ms, the first 10ms-frame has 6 UL subframes {#0, #1, #2, #5, #6, #7} which correspond to 6 processes respectively. The UL subframes {#1, #2} in the second 10ms-frame correspond to 2 processes respectively. The rest subframes all belong to these processes. In this case, the total UL HARQ process number=8, which also represents the smaller time value of the UL HARQ process. That is, the RTT is the smaller value of 8ms and 16ms, i.e. 8ms.

Step 102: determining the UL HARQ process ID according to the UL subframe number of the backhaul link and the total number of the UL HARQ processes of the backhaul link.

This embodiment calculates the UL HARQ process ID through a direct calculation mode or an indirect calculation mode. The direct calculation mode is as follows:
performing a modulo operation on the UL subframe number of the backhaul link by the total number of the UL HARQ processes (total UL HARQ process number), or the preset fixed value, or the minimum UL HARQ process time value, and taking the value obtained by the modulo operation as the UL HARQ process ID. Provided the current backhaul link UL subframe number is equal to 22, then the calculation mode is as follows:

$$\text{UL HARQ process ID=mod(UL subframe number, total UL HARQ process number)=mod(22, 8)=6.}$$

That is, the UL HARQ process ID corresponding to the subframe with the UL subframe number of the backhaul link 22 is 6.

The indirect calculation mode is as follows:
performing a modulo operation on the UL subframe number by the total UL HARQ process number, or the preset fixed value, or the minimum UL HARQ process time value, and taking the sum of the value obtained by the modulo operation and an adjustment amount as the UL HARQ process ID. The specific calculation mode is as follows:

temp ID=mod(UL subframe number, total UL HARQ process number)

$$\text{UL HARQ process ID=temp ID+x}$$

wherein x is the adjustment amount; - total UL HARQ process number<=x<=total UL HARQ process number; and the absolute value of the adjustment amount is an integer between 0 and the total UL HARQ process number. In this embodiment, the UL subframe number of the backhaul link and the UL HARQ process ID in the indirection calculation mode have the following corresponding relationships:

```
0<=temp ID<=2, UL HARQ process ID=temp ID+0;
3<=temp ID<=4, UL HARQ process ID=temp ID+3;
5<=temp ID<=7, UL HARQ process ID=temp ID-2;
temp ID=mod(UL subframe number, total UL HARQ process
number)=mod(22,8)=6;
UL HARQ process ID=temp ID-2=(6-2)=4.
```

The purpose of the indirect calculation mode is to make the order of the processes starting from 0ms to be in an ascending order. The ID of the eight processes starting from 0ms calculated by the direct calculation mode is {0, 1, 2, 5, 6, 7, 3, 4}, which correspond to UL subframes {#0, #1, #2, #5, #6, #7, #11, #12} respectively. And, the ID of the eight processes starting from 0ms calculated by the indirect calculation mode is {0, 1, 2, 3, 4, 5, 6, 7}, which correspond to UL subframes {#0, #1, #2, #5, #6, #7, #11, #12} respectively.

Step 103: the base station and the relay node identifies the UL HARQ process of the backhaul link according to the UL HARQ process ID obtained by calculation.

Embodiment 2

This embodiment is similar to the Embodiment 1. The difference lies in that a fixed value is used to replace the total UL HARQ process number in the formula of the Embodiment 1. It is provided that in the FDD system, the time of one complete UL HARQ process of the backhaul link is 10ms. Since the backhaul link cannot use subframes {#0, #4, #5, #9} in the mode of FDD, provided the current backhaul link UL subframe number is equal to 15, the fixed value is preferably 10. In this case, the minimum UL HARQ process time value, that is, the RTT, is 10ms. Then, when the direct calculation mode is adopted,

$$\text{UL HARQ process ID} = \text{mod(UL subframe number, fixed value)} = \text{mod}(15, 10) = 5.$$

When the indirection calculation mode is adopted, the UL subframe number of the backhaul link and the UL HARQ process ID have the following corresponding relationships:

```
0<=temp ID<=2,UL HARQ process ID=temp ID+0;
5<=temp ID<=7,UL HARQ process ID=temp ID-2;
temp ID=mod(UL subframe number, the fixed value)=mod(15,10)=5;
UL HARQ process ID=temp ID-2=(5-2)=3.
```

The base station and the relay node identify the UL HARQ process of the backhaul link according to the UL HARQ process ID obtained by calculation.

Embodiment 3

Fig. 2 shows a flowchart of a method of a base station and a relay node identifying a HARQ process of a backhaul link in an FDD system according to Embodiment 3. This embodiment identifies the UL HARQ process of the backhaul link according to a DL subframe number of the backhaul link. The detailed steps are as follows.

Step 201: determining the total number of the UL HARQ processes of the backhaul link according to the time of one complete UL HARQ process of the backhaul link.

It is provided that in the FDD system, the time of one complete UL HARQ process of the backhaul link is 8ms and/or 16ms. Since the backhaul link cannot use subframes {#0, #4, #5, #9}, then the total number of the UL HARQ processes of the backhaul link, that is, the total UL HARQ process number, is equal to 8.

Step 202: determining the UL HARQ process ID according to the DL subframe number of the backhaul link, an interval between the current backhaul link DL subframe and the corresponding backhaul link UL subframe and the total number of the UL HARQ processes of the backhaul link.

It is provided the DL subframe number of the backhaul link is equal to 8, and the interval between the current backhaul link DL subframe and the corresponding backhaul link UL subframe, that is, the DL_UL subframe interval, is equal to 4. The UL HARQ process ID is determined through a direct calculation mode or an indirect calculation mode. The direct calculation mode is as follows:

$$\text{UL HARQ process ID} = \text{mod(DL subframe number} + \text{DL\_UL subframe interval, total UL HARQ process number)} = \text{mod}((8+4),8) = \text{mod}(12,8) = 4.$$

The indirect calculation mode is as follows:

temp ID=mod(DL subframe number+DL_UL subframe interval, total UL HARQ process number);

UL HARQ process ID=temp ID+x;

wherein x is the adjustment amount, and the absolute value of the adjustment amount is an integer between 0 and the total UL HARQ process number. In this embodiment, in the indirection calculation mode, the UL subframe number of the backhaul link and the UL HARQ process ID have the following corresponding relationships:

```
0<=temp ID<=2, UL HARQ process ID=temp ID+0;
3<=temp ID<=4, UL HARQ process ID=temp ID+3;
5<=temp ID<=7, UL HARQ process ID=temp ID-2;
temp ID=mod(DL subframe number+DL_UL subframe interval, total UL HARQ
process number)= mod((8+4),8)=mod(12,8)=4;
UL HARQ process ID=temp ID+3=(4+3)=7.
```

Step 203: the base station and the relay node identifies the UL HARQ process of the backhaul link according to the UL HARQ process ID obtained by calculation.

Embodiment 4

This embodiment is similar to the Embodiment 3. The difference lies in that a fixed value is used to replace the total UL HARQ process number in the formula of the Embodiment 3. It is provided that in the FDD system, the time of one complete UL HARQ process of the backhaul link is 10ms. Since the backhaul link cannot use subframes {#0, #4, #5, #9} in the mode of FDD, provided the DL subframe number of the current backhaul link is equal to 18, and the interval between the current backhaul link DL subframe and the corresponding backhaul link UL subframe, that is, DL_UL subframe interval, is equal to 4, the fixed value is preferably 10. Then, when the direct calculation mode is adopted,

UL HARQ process ID=mod(DL subframe number+DL_UL subframe interval, fixed value)=mod((18+4),10)= mod(22,10)=2.

When the indirection calculation mode is adopted, the UL subframe number of the backhaul link and the UL HARQ process ID have the following corresponding relationships:

```
0<=temp ID<=2, UL HARQ process ID=temp ID+0;
5<=temp ID<=7, UL HARQ process ID=temp ID-2;
temp ID=mod(DL subframe number+DL_UL subframe interval, fixed value)=
mod((18+4),10)=mod(22,10)=2;
UL HARQ process ID=temp ID+0=(2+0)=2.
```

The base station and the relay node identify the UL HARQ process of the backhaul link according to the UL HARQ process ID obtained by calculation.

Embodiment 5

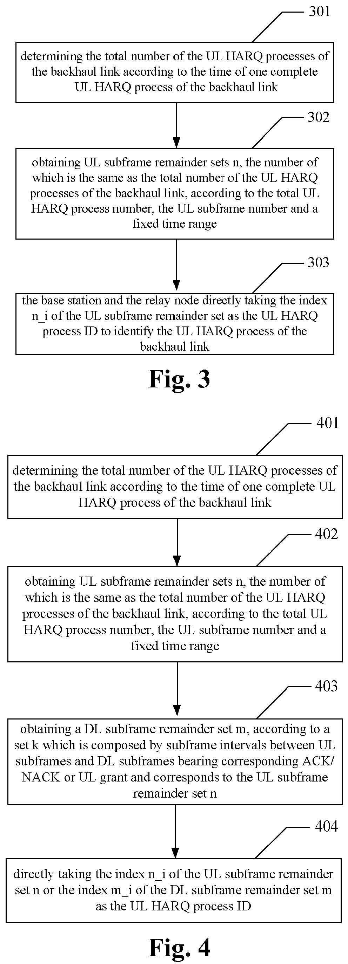

This embodiment adopts the FDD system. This embodiment identifies a UL HARQ process of a backhaul link according to an index of a UL subframe remainder set of the backhaul link. The detailed steps are as shown in Fig. 3.
Step 301: determining the total number of the UL HARQ processes of the backhaul link according to the time of one complete UL HARQ process of the backhaul link.
It is provided that in the FDD system, the time of one complete UL HARQ process of the backhaul link is 8ms and/or 16ms. Since the backhaul link cannot use subframes {#0, #4, #5, #9}, then the total number of the UL HARQ processes of the backhaul link, that is, the total UL HARQ process number, is equal to 8.
Step 302: obtaining UL subframe remainder sets n, the number of which is the same as the total number of the UL HARQ processes of the backhaul link, according to the total UL HARQ process number, the UL subframe number and a fixed time range.

The fixed time range is a repeat period of the set n. In this embodiment, the fixed time range is 40ms. The method of obtaining the UL subframe remainder set n is as follows. Since the fixed time range is 40ms, and the RTT selected in this embodiment is 8ms and/or 16ms, one UL HARQ process of the backhaul link at most corresponds to 3 subframes within 40ms. Thus, each UL subframe remainder set n comprises 3 elements. The remainders, obtained by performing a modulo operation on the UL subframe number by the fixed time range, are divided into 8 groups. That is, 8 sets of UL subframe remainders are obtained. The 8 sets of UL subframe remainders are as follows:

$n\_0 = \text{mod}(\text{UL subframe number},40) = (0\ 16\ 32)$,
$n\_1 = \text{mod}(\text{UL subframe number},40) = (1\ 17\ 25)$,
$n\_2 = \text{mod}(\text{UL subframe number},40) = (2\ 10\ 26)$,
$n\_3 = \text{mod}(\text{UL subframe number}\ 40) = (5\ 21\ 37)$,
$n\_4 = \text{mod}(\text{UL subframe number},40) = (6\ 22\ 30)$,
$n\_5 = \text{mod}(\text{UL subframe number},40) = (7\ 15\ 31)$,
$n\_6 = \text{mod}(\text{UL subframe number},40) = (11\ 27\ 35)$,
$n\_7 = \text{mod}(\text{UL subframe number},40) = (12\ 20\ 36)$.

Step 303: the base station and the relay node directly takes the index $n\_i$ of the UL subframe remainder set as the UL HARQ process ID to identify the UL HARQ process of the backhaul link.

For example, the set (0 16 32) corresponding to the set index $n\_0$ represents that this set comprises all UL subframes corresponding to remainders 0, 16, 32 obtained by dividing the UL subframe number by 40. Preferably, $n\_0$ corresponds to UL HARQ process ID=0, $n\_1$ corresponds to UL HARQ process ID=1, and so on. For example, provided SFN is #5, subframe #6 corresponding to slots #12 and #13 in this system frame is a UL subframe, then the corresponding UL subframe number=10*5+6=56. Then, the modulo operation by 40 is performed on 56, and16 is obtained. Since 16 belongs to $n\_0$, the corresponding UL HARQ process ID is "0". The corresponding relationship between other set indexes and the UL HARQ process ID is not enumerated here.

Embodiment 6

This embodiment is similar to the Embodiment 5. The difference lies in that the total UL HARQ process number is 6 in this embodiment, and the number of the set n obtained is 6. It is provided that in the FDD system, the time of one complete UL HARQ process of the backhaul link is 10ms. Since the backhaul link cannot use subframes {#0, #4, #5, #9} in the mode of FDD, then the total UL HARQ process number=6. That is to say, the number of the corresponding UL subframe remainder sets is 6. Correspondingly, the number of elements in each UL subframe remainder set is 4. This embodiment directly takes the index $n\_i$ of the UL subframe remainder set as the UL HARQ process ID. In this case, the fixed time, namely, the repeat period of the set n, is 40ms. The specific UL subframe remainder sets n are as follows:

$n\_0 = \text{mod}(\text{UL subframe number},40) = (0\ 10\ 20\ 30)$,
$n\_1 = \text{mod}(\text{UL subframe number},40) = (1\ 11\ 21\ 31)$,
$n\_2 = \text{mod}(\text{UL subframe number},40) = (2\ 12\ 22\ 32)$,
$n\_3 = \text{mod}(\text{UL subframe number},40) = (5\ 15\ 25\ 35)$,
$n\_4 = \text{mod}(\text{UL subframe number},40) = (6\ 16\ 26\ 36)$,
$n\_5 = \text{mod}(\text{UL subframe number},40) = (7\ 17\ 27\ 37)$.

For example, the set (2 12 22 32) corresponding to the set index $n\_2$ represents that this set comprises all UL subframes corresponding to remainders 2, 12, 22, 32 obtained by dividing the UL subframe number by 40. Preferably, $n\_0$ corresponds to UL HARQ process ID=0, $n\_1$ corresponds to UL HARQ process ID=1, and so on. For example, provided SFN is #9, subframe #5 corresponding to slots #10 and #11 in this system frame is a UL subframe. Then the corresponding UL subframe number=10*9+5=95. The modulo operation by 40 is performed on 95, and 15 is obtained. Since 15 belongs to $n\_3$, the corresponding UL HARQ process ID is "3". The corresponding relationship between other set indexes and the UL HARQ process ID is not enumerated here.

Embodiment 7

For an FDD system, this embodiment identifies a UL HARQ process of a backhaul link according to an index of a DL subframe remainder set of the backhaul link. The detailed steps are as shown in Fig. 4 and comprise the following steps.

Step 401: determining the total number of the UL HARQ processes of the backhaul link according to the time of one complete UL HARQ process of the backhaul link.

It is provided that in the FDD system, the time of one complete UL HARQ process of the backhaul link is 8ms and/or 16ms. Since the backhaul link cannot use subframes {#0, #4, #5, #9} in the mode of FDD, then the total number of the UL HARQ processes of the backhaul link, that is, total UL HARQ process number, is equal to 8.

Step 402: obtaining UL subframe remainder sets n, the number of which is the same as the total number of the UL HARQ processes of the backhaul link, according to the total UL HARQ process number, the UL subframe number and a fixed time range.

In this embodiment, the fixed time range is 40ms. The fixed time range is the repeat period of the set n. The number of the UL subframe remainder sets n is 8. Correspondingly, the number of DL subframe remainder sets m corresponding to the UL subframe remainder sets n is 8 too.

Step 403: obtaining the DL subframe remainder set m, according to a set k which is corresponding to the UL subframe remainder set n, and is composed by subframe intervals between the UL subframes and the DL subframes bearing corresponding ACK/NACK or UL grant.

The set n and the set m have a corresponding relationship. As shown in the following table, each DL subframe number remainder of the set m is obtained by adding the UL subframe number remainder at a corresponding position of the set n to the interval at a corresponding position of the set k. The set k is a set composed by subframe intervals between UL subframes satisfying the set n and DL subframes bearing corresponding ACK/NACK or UL grant. The specific corresponding relationship between the set n and the set m is as shown in Table 1.

Table 1

| UL subframe set n | Set k | DL subframe set m |
|---|---|---|
| n_0=mod(UL subframe number,40)=(0 16 32) | k_0=(12 12 4) | m_0=mod(DL subframe number, 40)=(12 28 36) |
| n_1=mod(UL subframe number,40)=(1 17 25) | k_1=(12 4 12) | m_1=mod(DL subframe number, 40)=(13 21 37) |
| n_2=mod(UL subframe number,40)=(2 10 26) | k_2=(4 12 12) | m_2=mod(DL subframe number,40)=(6 22 38) |
| n_3=mod(UL subframe number,40)=(5 21 37) | k_3=(12 12 4) | m_3=mod(DL subframe number, 40)=(17 33 1) |
| n_4=mod(UL subframe number,40)=(6 22 30) | k_4=(12 4 12) | m_4=mod(DL subframe number, 40)=(18 26 2) |
| n_5=mod(UL subframe number,40)=(7 15 31) | k_5=(4 12 12) | m_5=mod(DL subframe number, 40)=(11 27 3) |
| n_6=mod(UL subframe number,40)=(11 27 35) | k_6=(12 4 12) | m_6=mod(DL subframe number, 40)=(23 31 7) |
| n_7=mod(UL subframe number,40)=(12 20 36) | k_7=(4 12 12) | m_7=mod(DL subframe number, 40)=(16 32 8) |

Step 404: directly taking the index n_i of the UL subframe remainder set n or the index m_i of the DL subframe remainder set m as the UL HARQ process ID.

For example, the set (13 21 37) corresponding to the index m_1 represents that this set comprises all DL subframes corresponding to remainders 13, 21, 37 obtained by dividing the DL subframe number by 40. Specifically, the set (13 21 37) is obtained by summing the corresponding elements of the set (1 17 25) corresponding to n_1 and the set (12 4 12) corresponding to k_1. That is, (1 17 25)+(12 4 12)=(13 21 37). Preferably, n_0 or m_0 corresponds to UL HARQ process ID=0, n_1 or m_1 corresponds to UL HARQ process ID=1, and so on. Provided SFN is #1, subframe #3 corresponding to slots #6 and #7 in this system frame is a DL subframe. Then the corresponding DL subframe number=10*1+3=13. Then, the modulo operation by 40 is performed on 13, and 13 is obtained. Since 13 belongs to m_1, the corresponding UL HARQ process ID is "1". The corresponding relationship between other set indexes and the UL HARQ process ID is not enumerated here.

Embodiment 8

This embodiment is similar to the Embodiment 7. The difference lies in that the total UL HARQ process number is 6, and the number of the obtained sets n, k and m are also 6 respectively. It is provided that in the FDD system, the time of one complete UL HARQ process of the backhaul link is 10ms. Since the backhaul link cannot use subframes {#0, #4, #5, #9}, then the total UL HARQ process number of the backhaul link is equal to 6. Then, the number of the corresponding UL subframe remainder sets is 6. Correspondingly, in a fixed time range, the number of the DL subframe remainder sets m of the backhaul link satisfying the DL feedback information or UL grant corresponding to the sets n is 6 too. This embodiment directly takes the index of the UL subframe remainder set n or the index m_i of the DL subframe remainder set m as the UL HARQ process ID. In this case, the fixed time, namely, the repeat period of the set n, is 40ms.

The set n and the set m have a corresponding relationship. As shown in the following table, each DL subframe number of the set m is obtained by adding the UL subframe number at a corresponding position of the set n to the interval at a corresponding position of the set k. The set k is a set composed by subframe intervals between UL subframes of the set n and DL subframes bearing corresponding ACK/NACK or UL grant. The specific corresponding relationship between the set n and the set m is as shown in Table 2.

Table 2

| UL subframe set n | Set k | DL subframe set m |
|---|---|---|
| n_0=mod(UL subframe number,40)=(0 10 20 30) | k_0=(6 6 6 6) | m_0=mod(DL subframe number, 40)=(6 16 26 36) |
| n_1=mod(UL subframe number,40)=(1 11 21 31) | k_1=(6 6 6 6) | m_1=mod(DL subframe number, 40)=(7 17 27 37) |
| n_2=mod(UL subframe number,40)=(2 12 22 32) | k_2=(6 6 6 6) | m_2=mod(DL subframe number, 40)=(8 18 28 38) |
| n_3=mod(UL subframe number,40)=(5 15 25 35) | k_3=(6 6 6 6) | m_3=mod(DL subframe number, 40)=(11 21 31 1) |
| n_4=mod(UL subframe number,40)=(6 16 26 36) | k_4=(6 6 6 6) | m_4=mod(DL subframe number, 40)=(12 22 32 2) |
| n_5=mod(UL subframe number,40)=(7 17 27 37) | k_5=(6 6 6 6) | m_5=mod(DL subframe number, 40)=(13 23 33 3) |

For example, the set (11 21 31 1) corresponding to the index m_3 represents that this set comprises all DL subframes corresponding to remainders 11, 21, 31, 1 obtained by dividing the DL subframe number by 40. Specifically, the set (11 21 31 1) is obtained by summing corresponding elements of the set (5 15 25 35) corresponding to n_3 and the set (6 6 6 6) corresponding to k_3. That is, (5 15 25 35)+( 6 6 6 6)=( 11 21 31 1). Preferably, n_0 or m_0 corresponds to UL HARQ process ID=0, n_1 or m_1 corresponds to UL HARQ process ID=1, and so on. Provided SFN is #15, subframe #2 corresponding to slots #4 and #5 in this system frame is a DL subframe. Then the corresponding DL subframe number=10*15+2=152. Then, the modulo operation by 40 is performed on 152, and 32 is obtained. Since 32 belongs to m_4, the corresponding UL HARQ process ID is "4". The corresponding relationship between other set indexes and the UL HARQ process ID is not enumerated here.

Embodiment 9

This embodiment is for an LTE-A TDD system. In Rel10 of the LTE-A TDD system, slot allocation (UL-DL configuration) does not support the configurations of 0 and 5, wherein the specific slot configuration is as shown in Table 3.

Table 3

| Uplink-downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

Provided the UL subframe configuration of a backhaul link is based on a timing relationship between LTE UL grant and Physical Uplink Shared Channel (PUSCH), the specific relationship is as shown in Table 4.

Table 4

| TDD UL/DL Configuration | DL subframe number n | | | | | | | | | |
|---|---|---|---|---|---|---|---|---|---|---|
| | 0 | 1 | 2 | 3 | 4 | 5 | 6 | 7 | 8 | 9 |
| 0 | 4 | 6 | | | | 4 | 6 | | | |
| 1 | | 6 | | | 4 | | 6 | | | 4 |
| 2 | | | | 4 | | | | | 4 | |
| 3 | 4 | | | | | | | | 4 | 4 |
| 4 | | | | | | | | | 4 | 4 |
| 5 | | | | | | | | | 4 | |
| 6 | 7 | 7 | | | | 7 | 7 | | | 5 |

For example, for the DL subframe #4 of the backhaul link corresponding to the Configuration 1 in Table 4, based on the timing relationship between LTE UL grant and PUSCH, the UL subframe #8, after 4ms are added, is taken as the UL subframe of the backhaul link.

For example, for the DL subframe #8 of the backhaul link corresponding to the Configuration 2 in Table 4, based on the timing relationship between LTE UL grant and PUSCH, the UL subframe #2, after 4ms are added, is taken as the UL subframe of the backhaul link.

Similarly, preferred UL HARQ processes of the backhaul link is as shown in Table 5.

Table 5

| TDD UL/DL Configuration | UL subframe set n | UL HARQ process |
|---|---|---|
| 1 | n_1=mod(UL subframe number, 10) =(3 8) | UL subframe with remainder of 3 corresponds to process 0<br>UL subframe with remainder of 8 corresponds to process 1 |
| 2 | n_2=mod(UL subframe number, 10) =(2 7) | UL subframe with remainder of 2 corresponds to process 0<br>UL subframe with remainder of 7 corresponds to process 1 |
| 3 | n_3=mod(UL subframe number, 10) =(2 3) | UL subframe with remainder of 2 corresponds to process 0<br>UL subframe with remainder of 3 corresponds to process 1 |
| 4 | n_4=mod(UL subframe number, 10) =(2 3) | UL subframe with remainder of 2 corresponds to process 0<br>UL subframe with remainder of 3 corresponds to process 1 |
| 6 | n_6=mod(UL subframe number, 10) =(4) | UL subframe with remainder of 4 corresponds to process 0 |

Embodiment 10

This disclosure also provides a device for identifying a UL HARQ process of a backhaul link based on the method above, which is applied in a base station or a relay node to identify the UL HARQ process of the backhaul link and comprises:

a process identifier acquisition module, configured to acquire the identifier of the UL HARQ process of the backhaul link according to a UL subframe number of the backhaul link, or a DL subframe number of the backhaul link, or an index of a UL subframe remainder set of the backhaul link, or an index of a DL subframe remainder set of the backhaul link; and

an identification module, configured to identify the UL HARQ process of the backhaul link according to the obtained identifier of the UL HARQ process of the backhaul link.

The process identifier acquisition module is configured to perform a modulo operation on the UL subframe number of the backhaul link by a total UL HARQ process number, or a preset fixed value, or a minimum UL HARQ process time value, and to take the value obtained by the modulo operation as the identifier of the UL HARQ process; or,

the process identifier acquisition module is configured to perform a modulo operation on the UL subframe number by the total UL HARQ process number, or the preset fixed value, or the minimum UL HARQ process time value, and to take the sum of the value obtained by the modulo operation and an adjustment amount as the identifier of the UL HARQ process, wherein the absolute value of the adjustment amount is an integer between 0 and the total UL HARQ process number; or,

the process identifier acquisition module is configured to sum the DL subframe number of the backhaul link and a DL_UL subframe interval, to perform a modulo operation on the summation by the total UL HARQ process number, or the preset fixed value, or the minimum UL HARQ process time value, and to take the value obtained by the modulo operation as the identifier of the UL HARQ process; or,

the process identifier acquisition module is configured to sum the DL subframe number and the DL_UL subframe interval, to perform a modulo operation on the summation by the total UL HARQ process number, or the preset fixed value, or the minimum UL HARQ process time value, and to take the sum of the value obtained by the modulo operation and an adjustment amount as the identifier of the UL HARQ process, wherein the absolute value of the adjustment amount is an integer between 0 and the total UL HARQ process number; or,

the process identifier acquisition module is configured to obtain UL subframe remainder sets n, the number of which is the same as the total number of the UL HARQ processes of the backhaul link, according to the total UL HARQ process number, the UL subframe number and a fixed time range, and to take the index $n\_i$ of the UL subframe remainder set as the identifier of the UL HARQ process;

or the process identifier acquisition module is further configured to obtain a DL subframe remainder set m corresponding to the UL subframe remainder set n after obtaining the UL subframe remainder set n, and to take the index $m\_i$ of the DL subframe remainder set m as the identifier of the UL HARQ process;

wherein the UL subframe remainder set is a remainder set obtained by dividing the remainders, which are obtained by performing a modulo operation on the UL subframe number by the fixed time range, into groups, the number of which is the same as the total number of the UL HARQ processes of the backhaul link, wherein the fixed time range is a repeat period of the UL subframe remainder set.

Of course, the disclosure also can have many other embodiments. In the condition of not departing from the substance of the disclosure, those skilled in the art can made various corresponding changes and deformations according to the disclosure.

## Industrial Applicability

The disclosure provides a method and a device for identifying a UL HARQ process of a backhaul link. The technical solution adopted is that: a base station and a relay node identify the UL HARQ process of the backhaul link according to a UL subframe number of the backhaul link, or a DL subframe number of the backhaul link, or an index of a set composed by UL subframes of the backhaul link, or an index of a set composed by DL subframes of the backhaul link. The disclosure can be applied to the link from a base station to a relay node commendably, not only ensures the backward compatibility, but also solves the problem of identification of the UL HARQ process of the backhaul link, without adding new signalling overhead.

## Claims

1. A method for identifying an Uplink , UL, Hybrid Automatic Repeat Request , HARQ, process of a backhaul link, comprising:

a base station and a relay node identifying the UL HARQ process of the backhaul link according to a Downlink , DL, subframe number of the backhaul link,

**characterized in that** the method further comprises identifying the UL HARQ process of the backhaul link according to the DL subframe number of the backhaul link comprises: summing the DL subframe number of the backhaul link and an DL_UL subframe interval between a current backhaul link DL subframe and a backhaul link UL subframe corresponding to the current backhaul link DL subframe, performing a modulo operation on the summation by a total UL HARQ process number, or a preset fixed value, or the minimum UL HARQ process time value, and taking a value obtained by the modulo operation as an identifier of the UL HARQ process to identify the UL HARQ process of the backhaul link, wherein the current backhaul link DL subframe bears corresponding ACK/NACK or UL grant for the backhaul link UL subframe;

or, summing the DL subframe number and the DL_UL subframe interval, performing the modulo operation on the summation by the total UL HARQ process number, or the preset fixed value, or the minimum UL HARQ process time value, and taking a sum of a value obtained by the modulo operation and an adjustment amount as the identifier of the UL HARQ process to identify the UL HARQ process of the backhaul link, wherein an absolute value of the adjustment amount is an integer between 0 and the total UL HARQ process number.

2. The method according to claim 1, wherein identifying the UL HARQ process of the backhaul link according to the UL subframe number of the backhaul link comprises:

performing a modulo operation on the UL subframe number of the backhaul link by a total UL HARQ process number, or a preset fixed value, or the minimum UL HARQ process time value, and taking a value obtained by the modulo operation as an identifier of the UL HARQ process to identify the UL HARQ process of the backhaul link; or,

performing the modulo operation on the UL subframe number by the total UL HARQ process number, or the preset fixed value, or the minimum UL HARQ process time value, and taking a sum of a value obtained by the modulo operation and an adjustment amount as the identifier of the UL HARQ process to identify the UL HARQ process of the backhaul link, wherein an absolute value of the adjustment amount is an integer between 0 and the total UL HARQ process number.

3. The method according to claim 1, wherein identifying the UL HARQ process of the backhaul link according to the index of the UL subframe remainder set of the backhaul link comprises:

obtaining the UL subframe remainder sets n, the number of the UL subframe remainder sets is the same as the total number of the UL HARQ processes of the backhaul link, according to a total UL HARQ process number, the UL subframe number and a fixed time value; and

taking the indexes of the UL subframe remainder sets as identifiers of the UL HARQ processes to identify the UL HARQ processes of the backhaul link.

4. The method according to claim 1, wherein identifying the UL HARQ process of the backhaul link according to the index of the DL subframe remainder set of the backhaul link comprises:

obtaining the UL subframe remainder sets n, the number of which is the same as the total number of the UL HARQ processes of the backhaul link, according to a total UL HARQ process number, the UL subframe number and a fixed time value;

obtaining the DL subframe remainder set m corresponding to the UL subframe remainder set n; and

taking the index m_i of the DL subframe remainder set m as an identifier of the UL HARQ process to identify the UL HARQ process of the backhaul link.

5. The method according to claim 3 or 4, wherein obtaining the UL subframe remainder sets n comprises:
dividing remainders, which are obtained by performing a modulo operation on the UL subframe number by the fixed time value, into groups, the number of which is the same as the total number of the UL HARQ processes of the backhaul link, wherein each group is one UL subframe remainder set n.

6. The method according to claim 5, wherein obtaining the DL subframe remainder set m corresponding to the UL subframe remainder set n comprises:
each DL subframe number remainder in the DL subframe remainder set m being a value obtained by adding a UL subframe number remainder at a corresponding position in the UL subframe remainder set n to an interval at a corresponding position in a set k, wherein the set k is a set composed by subframe intervals between UL subframes satisfying the UL subframe remainder set n and DL subframes bearing corresponding Acknowledgement/Negative Acknowledgement (ACK/NACK) or UL grant information.

7. A device for identifying an Uplink , UL, Hybrid Automatic Repeat Request , HARQ, process of a backhaul link, applied in a base station or a relay node to identify the UL HARQ process of the backhaul link, comprising:

a process identifier acquisition module, configured to acquire an identifier of the UL HARQ process of the backhaul link, according to a Downlink (DL) , DL, subframe number of the backhaul link, and an identification module, configured to identify the UL HARQ process of the backhaul link according to the obtained identifier of the UL HARQ process of the backhaul link;
**characterized in that**
the process identifier acquisition module is configured to sum the DL subframe number of the backhaul link and an DL_UL subframe interval between a current backhaul link DL subframe and a backhaul link UL subframe corresponding to the current backhaul link DL subframe, to perform the modulo operation on the summation by the total UL HARQ process number, or the preset fixed value, or the minimum UL HARQ process time value, and to take a value obtained by the modulo operation as the identifier of the UL HARQ process; or, the process identifier acquisition module is configured to sum the DL subframe number and the DL_UL subframe interval, to perform the modulo operation on the summation by the total UL HARQ process number, or the preset fixed value, or the minimum UL HARQ process time value, and to take a sum of a value obtained by the modulo operation and an adjustment amount as the identifier of the UL HARQ process, wherein an absolute value of the adjustment amount is an integer between 0 and the total UL HARQ process number, wherein the current backhaul link DL subframe bears corresponding ACK/NACK or UL grant for the backhaul link UL subframe.

8. The device according to claim 7, wherein

the process identifier acquisition module is configured to perform a modulo operation on the UL subframe number of the backhaul link by a total UL HARQ process number, or a preset fixed value, or the minimum UL HARQ process time value, and to take a value obtained by the modulo operation as the identifier of the UL HARQ process; or,
the process identifier acquisition module is configured to perform the modulo operation on the UL subframe number by the total UL HARQ process number, or the preset fixed value, or the minimum UL HARQ process time value, and to take a sum of a value obtained by the modulo operation and an adjustment amount as the identifier of the UL HARQ process, wherein an absolute value of the adjustment amount is an integer between 0 and the total UL HARQ process number.

9. The device according to claim 7, wherein

the process identifier acquisition module is configured to obtain the UL subframe remainder sets n, the number of which is the same as the total number of the UL HARQ processes of the backhaul link, according to a total UL HARQ process number, the UL subframe number and a fixed time value, and to take the index n_i of the UL subframe remainder set as the identifier of the UL HARQ process;
or, to obtain the DL subframe remainder set m corresponding to the UL subframe remainder set n after obtaining the UL subframe remainder set n, and to take the index m_i of the DL subframe remainder set m as the identifier of the UL HARQ process;
wherein the UL subframe remainder set is a remainder set obtained by dividing remainders, which are obtained by performing a modulo operation on the UL subframe number by the fixed time value, into groups, according to the total number of the UL HARQ processes of the backhaul link.

**Patentansprüche**

1. Verfahren zum Erkennen eines Uplink-, UL-, Hybrid-Automatik-Wiederholungsanfrageprozesses, HARQ, eines Backhaul-Links, umfassend:

eine Basisstation und einen Relaisknoten, die den UL-HARQ-Prozess des Backhaul-Links gemäß einer Downlink-, DL-, Subframe-Anzahl des Backhaul-Links erkennen, **dadurch gekennzeichnet, dass** das Verfahren ferner das Erkennen des UL-HARQ-Prozesses des Backhaul-Links gemäß der DL-Subframe-Anzahl des Backhaul-Links Folgendes umfasst: Summieren der DL-Subframe-Anzahl des Backhaul-Links und eines DL_UL-Subframe-Intervalls zwischen einem aktuellen Backhaul-Link-DL-Subframe und einem Backhaul-Link-UL-Subframe, der dem aktuellen Backhaul-Link-DL-Subframe entspricht, Ausführen einer Modulo-Operation an der Summierung durch eine Gesamt-UL-HARQ-Prozessanzahl oder einen voreingestellten Festwert oder den Mindest-UL-HARQ-Prozesszeitwert, und Nehmen eines Werts, der durch die Modulo-Operation erhalten wird, als eine Kennung des UL-HARQ-Prozesses, um den UL-HARQ-Prozess des Backhaul-Links zu erkennen, wobei der aktuelle Backhaul-Link-DL-Subframe eine entsprechende ACK/NACK- oder UL-Gewährung für den Backhaul-Link-UL-Subframe trägt;

oder Summieren der DL-Subframe-Anzahl und des DL_UL-Subframe-Intervalls, Ausführen der Modulo-Operation an der Summierung durch die Gesamt-UL-HARQ-Prozessanzahl oder den voreingestellten Festwert oder den Mindest-UL-HARQ-Prozesszeitwert, und Nehmen einer Summe eines Werts, der durch die Modulo-Operation und eine Einstellungsmenge erhalten wird, als die Kennung des UL-HARQ-Prozesses zum Erkennen des UL-HARQ-Prozesses des Backhaul-Links, wobei ein Absolutwert der Einstellungsmenge eine Ganzzahl zwischen 0 und der Gesamt-UL-HARQ-Prozessanzahl ist.

2. Verfahren nach Anspruch 1, wobei das Erkennen des UL-HARQ-Prozesses des Backhaul-Links gemäß der UL-Subframe-Anzahl des Backhaul-Links Folgendes umfasst:

Ausführen einer Modulo-Operation an der UL-Subframe-Anzahl des Backhaul-Links durch eine Gesamt-UL-HARQ-Prozessanzahl oder einen voreingestellten Festwert oder den Mindest-UL-HARQ-Prozesszeitwert, und Nehmen eines Werts, der durch die Modulo-Operation erhalten wird, als eine Kennung des UL-HARQ-Prozesses, um den UL-HARQ-Prozess des Backhaul-Links zu erkennen; oder Ausführen der Modulo-Operation an der UL-Subframe-Anzahl durch die Gesamt-UL-HARQ-Prozessanzahl oder den voreingestellten Festwert oder den Mindest-UL-HARQ-Prozesszeitwert, und Nehmen einer Menge eines Werts, der durch die Modulo-Operation erhalten wird, und einer Einstellungsmenge als die Kennung des UL-HARQ-Prozesses zum Erkennen des UL-HARQ-Prozesses des Backhaul-Links, wobei ein Absolutwert der Einstellungsmenge eine Ganzzahl zwischen 0 und der Gesamt-UL-HARQ-Prozessanzahl ist.

3. Verfahren nach Anspruch 1, wobei das Erkennen des UL-HARQ-Prozesses des Backhaul-Links gemäß dem Index des UL-Subframe-Restsatzes des Backhaul-Links Folgendes umfasst:

Erhalten der UL-Subframe-Restsätze n, wobei die Anzahl der UL-Subframe-Restsätze die gleiche ist wie die Gesamtanzahl der UL-HARQ-Prozesse des Backhaul-Links gemäß einer Gesamt-UL-HARQ-Prozessanzahl, der UL-Subframe-Anzahl und einem festen Zeitwert; und Nehmen der Indizes der UL-Subframe-Restsätze als Kennungen der UL-HARQ-Prozesse zum Erkennen der UL-HARQ-Prozesse des Backhaul-Links.

4. Verfahren nach Anspruch 1, wobei das Erkennen des UL-HARQ-Prozesses des Backhaul-Links gemäß dem Index des DL-Subframe-Restsatzes des Backhaul-Links Folgendes umfasst:

Erhalten der UL-Subframe-Restsätze n, deren Anzahl gleich der Gesamtanzahl der UL-HARQ-Prozesse des Backhaul-Links ist, gemäß einer Gesamt-UL-HARQ-Prozessanzahl, der UL-Subframe-Anzahl und einem festen Zeitwert; Erhalten des DL-Subframe-Restsatzes m, der dem UL-Subframe-Restsatz n entspricht; und Nehmen des Index m_i des DL-Subframe-Restsatzes m als eine Kennung des UL-HARQ-Prozesses, um den UL-HARQ-Prozesses des Backhaul-Links zu erkennen.

5. Verfahren nach Anspruch 3 oder 4, wobei das Erhalten der UL-Subframe-Restsätze n Folgendes umfasst:
Teilen von Resten, die durch Ausführen einer Modulo-Operation an der UL-Subframe-Anzahl durch den festen Zeitwert erhalten werden, in Gruppen, deren Anzahl die gleiche ist wie die Gesamtzahl der UL-HARQ-Prozesse des Backhaul-Links, wobei jede Gruppe ein UL-Subframe-Restsatz n ist.

6. Verfahren nach Anspruch 5, wobei das Erhalten des DL-Subframe-Restsatzes m, der dem UL-Subframe-Restsatz n entspricht, Folgendes umfasst:
jeder DL-Subframe-Anzahlrest in dem DL-Subframe-Restsatz m ist ein Wert, der durch Addieren eines UL-Subframe-Anzahlrests an einer entsprechenden Position in dem UL-Subframe-Restsatz n zu einem Intervall an einer entsprechenden Position in einem Satz k erhalten wird, wobei der Satz k ein Satz ist, der aus Subframe-Intervallen zwischen UL-Subframes, die den UL-Subframe-Restsatz n erfüllen, und DL-Subframes besteht, die entsprechende Bestätigungs-/Negativ-Bestätigungs- (ACK/NACK-) oder UL-Gewährungsinformationen tragen.

**7.** Vorrichtung zum Erkennen eines Uplink-, UL-, Hybrid-Automatik-Wiederholungsanfrageprozesses, HARQ , eines Backhaul-Links, der in einer Basisstation oder einem Relaisknoten angewendet wird, zum Erkennen des UL-HARQ-Prozesses des Backhaul-Links, die Folgendes umfasst:

ein Prozesskennungs-Ermittlungsmodul, das dazu konfiguriert ist, eine Kennung des UL-HARQ-Prozesses des Backhaul-Links gemäß einer Downlink- (DL-), DL, -Subframe-Anzahl des Backhaul-Links zu ermitteln, und ein Erkennungsmodul, das dazu konfiguriert ist, den UL-HARQ-Prozess des Backhaul-Links gemäß der erhaltenen Kennung des UL-HARQ-Prozesses des Backhaul-Links zu erkennen;
**dadurch gekennzeichnet, dass** das Prozesskennungs-Ermittlungsmodul dazu konfiguriert ist, die DL-Subframe-Anzahl des Backhaul-Links und ein DL_UL-Subframe-Intervall zwischen einem aktuellen Backhaul-Link-DL-Subframe und einem Backhaul-Link-UL-Subframe, der dem aktuellen Backhaul-Link-DL-Subframe entspricht, zu summieren, um die Modulo-Operation bei der Summierung durch die Gesamt-UL-HARQ-Prozessanzahl oder den voreingestellten Festwert oder den Mindest-UL-HARQ-Prozesszeitwert auszuführen, und um einen Wert, der durch die Modulo-Operation erhalten wird, als die Kennung des UL-HARQ-Prozesses zu nehmen; oder dass das Prozesskennungs-Ermittlungsmodul dazu konfiguriert ist, die DL-Subframe-Anzahl und das DL_UL-Subframe-Intervall zu summieren, um die Modulo-Operation an der Summierung durch die Gesamt-UL-HARQ-Prozessanzahl oder den voreingestellten Festwert oder den Mindest-UL-HARQ-Prozesszeitwert auszuführen, und eine Summe eines Werts, der durch die Modulo-Operation erhalten wird, und einer Einstellungsmenge, als die Kennung des UL-HARQ-Prozesses zu nehmen, wobei ein Absolutwert der Einstellungsmenge eine Ganzzahl zwischen 0 und der Gesamt-UL-HARQ-Prozessanzahl ist, wobei der aktuelle Backhaul-Link-DL-Subframe eine entsprechende ACK/NACK- oder UL-Gewährung für den Backhaul-Link-UL-Subframe trägt.

**8.** Vorrichtung nach Anspruch 7, wobei das Prozesskennungs-Ermittlungsmodul dazu konfiguriert ist, eine Modulo-Operation an der UL-Subframe-Anzahl des Backhaul-Links durch eine Gesamt-UL-HARQ-Prozessanzahl oder einen voreingestellten Festwert oder den Mindest-UL-HARQ-Prozesszeitwert auszuführen, und einen Wert, der durch die Modulo-Operation erhalten wird, als die Kennung des UL-HARQ-Prozesses zu nehmen; oder das Prozesskennungs-Ermittlungsmodul dazu konfiguriert ist, die Modulo-Operation an der UL-Subframe-Anzahl durch die Gesamt-UL-HARQ-Prozessanzahl oder den voreingestellten Festwert oder den Mindest-UL-HARQ-Prozesszeitwert auszuführen und einen Wert, der durch die Modulo-Operation erhalten wird, und eine Einstellungsmenge als die Kennung des UL-HARQ-Prozesses zu nehmen, wobei ein Absolutwert der Einstellungsmenge eine Ganzzahl zwischen 0 und der Gesamt-UL-HARQ-Prozessanzahl ist.

**9.** Vorrichtung nach Anspruch 7, wobei das Prozesskennungs-Ermittlungsmodul dazu konfiguriert ist, die UL-Subframe-Restsätze n, deren Anzahl gleich der Gesamtzahl der UL-HARQ-Prozesse des Backhaul-Links ist, gemäß einer Gesamt-UL-HARQ-Prozessanzahl, der UL-Subframe-Anzahl und einem festen Zeitwert, zu erhalten, und den Index n_i des UL-Subframe-Restsatzes als die Kennung des UL-HARQ-Prozesses zu nehmen;

oder den DL-Subframe-Restsatz m, der dem UL-Subframe-Restsatz n nach Erhalten des UL-Subframe-Restsatzes n entspricht, zu erhalten und den Index m_i des DL-Subframe-Restsatzes m als die Kennung des UL-HARQ-Prozesses zu nehmen;
wobei der UL-Subframe-Restsatz ein Restsatz ist, der erhalten wird, indem Reste, die durch Ausführen einer Modulo-Operation an der UL-Subframe-Anzahl durch den festen Zeitwert erhalten werden, in Gruppen gemäß der Gesamtzahl der UL-HARQ-Prozesse des Backhaul-Links geteilt werden.

## Revendications

**1.** Procédé pour identifier un processus de demande de répétition automatique hybride, HARQ, de liaison montante, UL, d'une liaison en retour, comprenant :

une station de base et un nœud relais identifiant le processus HARQ UL de la liaison en retour en fonction d'un nombre de sous-trames de liaison descendante, DL, de la liaison en retour, **caractérisé en ce que** le procédé comprend en outre l'identification du processus HARQ UL de la liaison en retour selon le nombre de sous-trames DL de la liaison en retour comprend : la sommation du nombre de sous-trames DL de la liaison en retour et d'un intervalle de sous-trame DL_UL entre une sous-trame DL de la liaison en retour actuelle et une sous-trame UL de la liaison en retour correspondant à la sous-trame DL de la liaison en retour actuelle, l'exécution d'une opération modulo sur la sommation par un nombre total de processus HARQ UL, ou une valeur fixe prédéfinie, ou la valeur de temps minimale de processus HARQ UL, et l'utilisation d'une valeur obtenue par l'opération modulo comme identifiant du processus HARQ UL pour identifier le processus HARQ UL de la liaison en retour, la sous-trame DL de la liaison en retour actuelle portant une autorisation ACK/NACK ou UL correspondante pour la sous-trame UL de la liaison en retour ;

ou, la sommation du nombre de sous-trames DL et l'intervalle de sous-trame DL_UL, en exécutant l'opération modulo sur la sommation par le nombre total de processus HARQ UL, ou la valeur fixe prédéfinie, ou la valeur de temps minimale de processus HARQ UL, et l'utilisation d'une somme d'une valeur obtenue par l'opération modulo et d'une quantité d'ajustement comme identifiant du processus HARQ UL pour identifier le processus HARQ UL de la liaison en retour, une valeur absolue de la quantité d'ajustement étant un nombre entier compris entre 0 et le nombre total de processus HARQ UL.

2. Procédé selon la revendication 1, dans lequel l'identification du processus HARQ UL de la liaison en retour selon le nombre de sous-trames UL de la liaison en retour comprend :

l'exécution d'une opération modulo sur le nombre de sous-trames UL de la liaison en retour par un nombre total de processus HARQ UL, ou une valeur fixe prédéfinie, ou la valeur de temps minimale de processus HARQ UL, et l'utilisation d'une valeur obtenue par l'opération modulo comme identifiant du processus HARQ UL pour identifier le processus HARQ UL de la liaison en retour ; ou,

l'exécution de l'opération modulo sur le nombre de sous-trames UL par le nombre total de processus HARQ UL, ou la valeur fixe prédéfinie, ou la valeur de temps minimale de processus HARQ UL, et l'utilisation d'une somme d'une valeur obtenue par l'opération modulo et d'une quantité d'ajustement comme identifiant du processus HARQ UL pour identifier le processus HARQ UL de la liaison en retour, une valeur absolue de la quantité d'ajustement étant un nombre entier compris entre 0 et le nombre total de processus HARQ UL.

3. Procédé selon la revendication 1, dans lequel l'identification du processus HARQ UL de la liaison en retour en fonction de l'index de l'ensemble de restes de sous-trame UL de la liaison en retour comprend :

l'obtention des ensembles n de restes de sous-trame UL, le nombre des ensembles de restes de sous-trame UL étant le même que le nombre total de processus HARQ UL de la liaison en retour, en fonction d'un nombre total de processus HARQ UL, du nombre de sous-trames UL et d'une valeur de temps fixe ; et

l'utilisation des index des ensembles de restes de sous-trame UL comme identifiants des processus HARQ UL pour identifier les processus HARQ UL de la liaison en retour.

4. Procédé selon la revendication 1, dans lequel l'identification du processus HARQ UL de la liaison en retour en fonction de l'index de l'ensemble de restes de sous-trame DL de la liaison en retour comprend :

l'obtention des ensembles n de restes de sous-trame UL, dont le nombre est le même que le nombre total de processus HARQ UL de la liaison en retour, en fonction d'un nombre total de processus HARQ UL, du nombre de sous-trames UL et d'une valeur de temps fixe ;

l'obtention de l'ensemble m de restes de sous-trame DL correspondant à l'ensemble n de restes de sous-trame UL ; et

l'utilisation de l'index m_i de l'ensemble m de restes de sous-trame DL comme identifiant du processus HARQ UL pour identifier le processus HARQ UL de la liaison en retour.

5. Procédé selon la revendication 3 ou 4, dans lequel l'obtention de l'ensemble n de restes de sous-trame UL comprend :
la division des restes, qui sont obtenus en exécutant une opération modulo sur le nombre de sous-trames UL par la valeur de temps fixe, en groupes, dont le nombre est le même que le nombre total de processus HARQ UL de la liaison en retour, chaque groupe étant un ensemble n de restes de sous-trame UL.

6. Procédé selon la revendication 5, dans lequel l'obtention de l'ensemble m de restes de sous-trame DL correspondant à l'ensemble n de restes de sous-trame UL comprend :
chaque reste de nombre de sous-trames DL dans l'ensemble m de restes de sous-trame DL étant une valeur obtenue en ajoutant un reste de nombre de sous-trames UL dans une position correspondante dans l'ensemble n de restes de sous-trame UL à un intervalle dans une position correspondante dans un ensemble k, l'ensemble k étant un ensemble composé d'intervalles de sous-trame entre des sous-trames UL satisfaisant à l'ensemble n de restes de sous-trame UL et des sous-trames DL portant une information d'autorisation correspondante d'acquittement/acquittement négatif (ACK/NACK) ou UL.

**7.** Dispositif pour identifier un processus de demande de répétition automatique hybride, HARQ, de liaison montante, UL, d'une liaison en retour, appliqué dans une station de base ou un nœud relais pour identifier le processus HARQ UL de la liaison en retour, comprenant :

un module d'acquisition d'identifiant de processus, configuré pour acquérir un identifiant du processus HARQ UL de la liaison en retour, en fonction d'un nombre de sous-trames de liaison descendante (DL), DL, de la liaison en retour, et
un module d'identification, configuré pour identifier le processus HARQ UL de la liaison en retour en fonction de l'identifiant obtenu du processus HARQ UL de la liaison en retour ;
**caractérisé en ce que** le module d'acquisition d'identifiant de processus est configuré pour sommer le nombre de sous-trames DL de la liaison en retour et un intervalle de sous-trame DL_UL entre une sous-trame DL de liaison en retour actuelle et une sous-trame UL de liaison en retour correspondant à la sous-trame DL de liaison en retour actuelle, pour exécuter l'opération modulo sur la sommation par le nombre total de processus HARQ UL, ou la valeur fixe prédéfinie, ou la valeur de temps minimale de processus HARQ UL, et pour utiliser une valeur obtenue par l'opération modulo comme identifiant du processus HARQ UL ; ou, le module d'acquisition d'identifiant de processus est configuré pour sommer le nombre de sous-trames DL et l'intervalle de sous-trame DL_UL, pour exécuter l'opération modulo sur la sommation par le nombre total de processus HARQ UL, ou la valeur fixe prédéfinie, ou la valeur de temps minimale de processus HARQ UL, et pour utiliser une somme d'une valeur obtenue par l'opération modulo et d'une quantité d'ajustement comme identifiant du processus HARQ UL, une valeur absolue de la quantité d'ajustement étant un nombre entier entre 0 et le nombre total de processus HARQ UL, la sous-trame DL de la liaison en retour actuelle portant une autorisation ACK/NACK ou UL correspondante pour la sous-trame UL de la liaison en retour.

**8.** Dispositif selon la revendication 7, dans lequel le module d'acquisition d'identifiant de processus est configuré pour exécuter une opération modulo sur le nombre de sous-trames UL de la liaison en retour par un nombre total de processus HARQ UL, ou une valeur fixe prédéfinie, ou la valeur de temps minimale de processus HARQ UL, et pour utiliser une valeur obtenue par l'opération modulo comme identifiant du processus HARQ UL ; ou,
le module d'acquisition d'identifiant de processus est configuré pour exécuter l'opération modulo sur le nombre de sous-trames UL par le nombre total de processus HARQ UL, ou la valeur fixe prédéfinie, ou la valeur de temps minimale de processus HARQ UL, et pour utiliser une somme d'une valeur obtenue par l'opération modulo et d'une quantité d'ajustement comme identifiant du processus HARQ UL, une valeur absolue de la quantité d'ajustement étant un nombre entier entre 0 et le nombre total de processus HARQ UL.

**9.** Dispositif selon la revendication 7, dans lequel le module d'acquisition d'identifiant de processus est configuré pour obtenir les ensembles n de restes de sous-trame UL, dont le nombre est le même que le nombre total de processus HARQ UL de la liaison en retour , en fonction d'un nombre total de processus HARQ UL, du nombre de sous-trames UL et d'une valeur de temps fixe, et utiliser l'index n_i de l'ensemble de restes de sous-trame UL comme identifiant du processus HARQ UL ;

ou, pour obtenir l'ensemble m de restes de sous-trame DL correspondant à l'ensemble de restes de sous-trame UL n après l'obtention de l'ensemble n de restes de sous-trame UL, et pour utiliser l'indice m_i de l'ensemble m de restes de sous-trame DL comme identifiant du processus HARQ UL ;
dans lequel l'ensemble de restes de sous-trame UL est un ensemble de restes obtenu en divisant les restes, qui sont obtenus en exécutant une opération modulo sur le nombre de sous-trames UL par la valeur de temps fixe, en groupes, en fonction du nombre total de processus HARQ UL de la liaison en retour.

101

determining the total number of the UL HARQ processes of the backhaul link according to the time of one complete UL HARQ process of the backhaul link

102

determining the UL HARQ process ID according to the UL subframe number of the backhaul link and the total number of the UL HARQ processes of the backhaul link

103

the base station and the relay node identifying the UL HARQ process of the backhaul link according to the UL HARQ process ID obtained by calculation

**Fig. 1**

201

determining the total number of the UL HARQ processes of the backhaul link according to the time of one complete UL HARQ process of the backhaul link

202

determining the UL HARQ process ID, according to the DL subframe number of the backhaul link, an interval between the current backhaul link DL subframe and the corresponding backhaul link UL subframe and the total number of the UL HARQ processes of the backhaul link

203

the base station and the relay node identifying the UL HARQ process of the backhaul link according to the UL HARQ process ID obtained by calculation

**Fig. 2**

301

determining the total number of the UL HARQ processes of the backhaul link according to the time of one complete UL HARQ process of the backhaul link

302

obtaining UL subframe remainder sets n, the number of which is the same as the total number of the UL HARQ processes of the backhaul link, according to the total UL HARQ process number, the UL subframe number and a fixed time range

303

the base station and the relay node directly taking the index n_i of the UL subframe remainder set as the UL HARQ process ID to identify the UL HARQ process of the backhaul link

**Fig. 3**

401

determining the total number of the UL HARQ processes of the backhaul link according to the time of one complete UL HARQ process of the backhaul link

402

obtaining UL subframe remainder sets n, the number of which is the same as the total number of the UL HARQ processes of the backhaul link, according to the total UL HARQ process number, the UL subframe number and a fixed time range

403

obtaining a DL subframe remainder set m, according to a set k which is composed by subframe intervals between UL subframes and DL subframes bearing corresponding ACK/ NACK or UL grant and corresponds to the UL subframe remainder set n

404

directly taking the index n_i of the UL subframe remainder set n or the index m_i of the DL subframe remainder set m as the UL HARQ process ID

**Fig. 4**